# EUROPEAN PATENT SPECIFICATION

(11) **EP 1 934 508 B1**
(45) Date of publication and mention of the grant of the patent: **24.05.2017**
(21) Application number: 06792396.1
(22) Date of filing: 04.10.2006
(51) Int. Cl.: F16L 15/00, F16L 58/18

(54) **TUBULAR THREADED ELEMENT PROVIDED WITH A DRY PROTECTIVE COATING**
ROHRFÖRMIGES ELEMENT MIT GEWINDE, MIT FESTSTOFFSCHUTZBESCHICHTUNG
ELEMENT FILETE TUBULAIRE DOTE D'UN REVETEMENT PROTECTEUR SEC

(30) Priority: 14.10.2005 FR 0510503
(43) Date of publication of application: 25.06.2008
(73) Proprietor: VALLOUREC OIL AND GAS FRANCE, 59620 Aulnoye-Aymeries (FR); Nippon Steel & Sumitomo Metal Corporation, Tokyo 100-8071 (JP)
(72) Inventor: BORDET, Laurent, F-59000 Lille (FR); GILLOT, Laurent, F-59144 Wargnies le Petit (FR); PINEL, Eliette, F-69007 Lyon (FR); GARD, Eric, F-69580 Sathonay Village (FR)
(74) Representative: Plaçais, Jean Yves
(86) International application number: PCT/EP2006/009707
(87) International publication number: WO 2007/042231

(56) References cited:
- EP-A- 1 211 451
- EP-A- 1 258 513
- EP-A- 1 411 288
- WO-A-96/20083
- US-A1- 2003 094 810
- US-B1- 6 635 341
- US-B1- 6 695 012

## Description

The invention relates to a threaded element for a threaded tubular connection.

### Prior art

Threaded elements produced at the end of a tubular component (tube or coupling) used in hydrocarbon wells must first be protected against corrosion during transport and storage at the drilling site and to this end, they are traditionally coated with protective grease or oil on leaving the production shop.

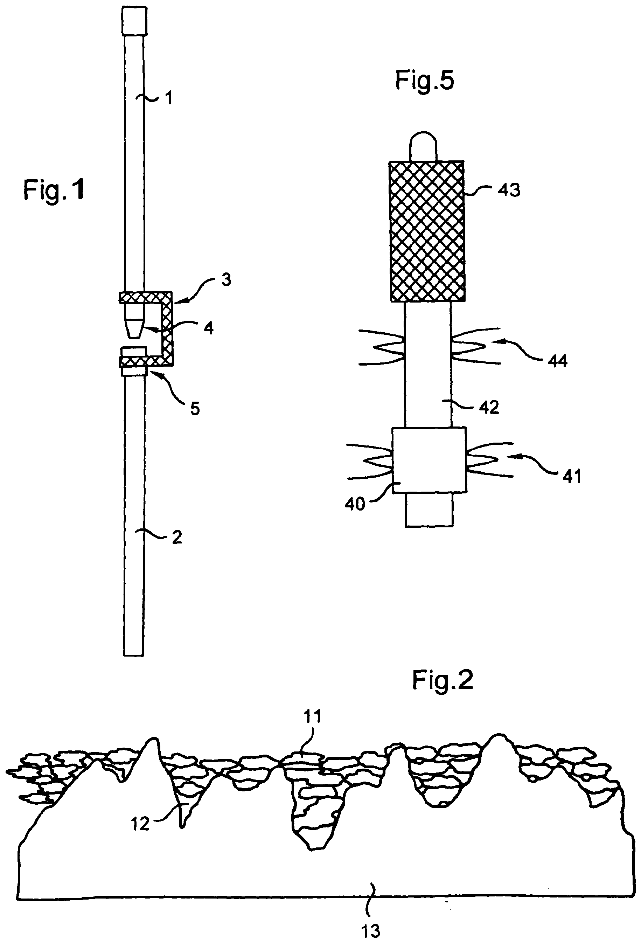

At the well, they may have to undergo several makeup-breakout cycles. Makeup operations are carried out vertically under high axial load, for example the weight of a tube several metres in length (typically 10 to 13 metres in length) to be assembled vertically via the threaded connection, which runs the risk of galling, in particular at the threading. Moreover said load may also be localized due to a slight misalignment in the axes of the threaded elements to be assembled because the tube to be assembled is suspended vertically, which increases the risk of galling. Thus, Figure 1 shows on site assembling via a threaded connection of two tubes 1 and 2, which are 10 to 13 metres in length, with a misalignment, power tongs 3 being used to make up the male threaded portion 4 of tube 1 into the female threaded portion 5 of tube 2.

To protect the sensitive parts such as threadings against galling during makeup-breakout operations, the threadings are traditionally freed of protective grease and coated with special makeup grease such as grease meeting the specifications of API Bul 5A2 or 5A3. In addition to the disadvantage of having to provide a second coating on site, the use of such grease, charged with heavy and/or toxic metals such as lead, also causes pollution of the well and the environment, as the excess grease is ejected from the threadings during makeup.

United States US 6 933 264 proposes replacing the double coating by a single coating, carried out in the shop for producing the threaded elements, using a thin layer of a lubricant with a waxy consistency (known as semi-dry) comprising at least one extreme pressure additive having a chemical action. Said semi-dry coating, however, suffers from the drawback of requiring mechanical protection against pollution by dust or sand particles during transport and storage.

US 4 414 247, US 4 630 849, US 6 027 145, US-B2-6 679 526, US-2004/0166341 A1, EP1411288 and International patent application WO-2004/033951 propose replacing the grease by a variety of protective solid coatings applied in the shop for producing the threaded elements, comprising a solid matrix which adheres to the substrate and in which solid lubricating particles are dispersed; molybdenum disulphide, MoS₂, is among the most particularly cited compounds.

Such coatings, while representing an improvement over grease, are still not entirely satisfactory. In particular, under drill site conditions, the coating frequently flakes off and/or particles are torn from the rubbed surface thereof and dispersed into the environment, such incidents involving returning the tubular component to the plant.

In addition, such coatings generally require hardening by heating in a furnace to about 200°C for several tens of minutes or even for over an hour, which considerably adds to the complexity of the coating production cycle, which cannot be linked to machining the threadings.

Further, they generally do not or do not sufficiently protect the threaded elements from corrosion, and so US-B2-6 679 526 and WO-2004/033951 propose applying a separate layer of a corrosion inhibiting material (a metal salt of a carboxylic acid in the first document, an epoxy resin containing zinc particles in the second document).

Such a two-layered coating necessitates even more complex production cycles and still does not overcome particle tear off problems.

The aim of the invention is to overcome the disadvantages of known greases and dry or semi-dry coatings, at least from the tribological viewpoint under on-site conditions and as regards the productivity of application of the coating, and optionally from the corrosion viewpoint.

The term "makeup under on-site conditions" means makeup in the vertical position in which (i) a first threaded element is fixed in a vertical position and (ii) a second threaded element to be made up into the first threaded element, disposed at or integral with the lower end of a tube which may be 13 metres long, is kept substantially vertically above the first threaded element by a lifting device, the second threaded element then being made up into the first using a suitable device such as power tongs. Similarly, the term "breakout under on-site conditions" means breakout of vertically disposed first and second threaded elements and thus supporting the weight of a tube and possibly subject to misalignment, the tube to be broken out being suspended from a lifting device.

In particular, the invention provides a threaded element for a threaded tubular connection which is resistant to galling, comprising a threading coated with a solid thin coating which is not sticky to the touch and adheres to the substrate, which comprises a solid matrix in which particles of solid lubricant are suspended.

According to the invention, the solid matrix is lubricating and exhibits plastic or viscoplastic type rheological behaviour, and said particles of solid lubricant comprise particles of lubricants from at least two of classes 1, 2, 3 and 4, as will be defined below.

Optional characteristics of the invention, which may be complementary or substitutional, are set out below:
• said matrix has a melting point in the range 80°C to 320°C;
• said matrix comprises at least one thermoplastic polymer;
• said thermoplastic polymer is polyethylene;
• said matrix comprises at least one metal soap;
• the soap is fitted for contributing to capture coating debris produced by friction;
• the soap is zinc stearate;
• said matrix comprises at least one wax of vegetable, animal, mineral or synthetic origin;
• the wax is fitted for contributing to capture debris from the coating produced by friction;
• the wax is carnauba wax;
• said matrix comprises at least one corrosion inhibitor;
• the corrosion inhibitor is a calcium sulphonate derivative;
• the soap is selected to improve the time to appearance of corrosion under the ISO 9227 standard salt spray corrosion test;
• said matrix comprises at least one liquid polymer with a kinematic viscosity at 100°C of at least 850 mm²/s;
• said liquid polymer is insoluble in water;
• said liquid polymer is selected from an alkyl polymethacrylate, a polybutene, a polyisobutene and a polydialkylsiloxane;
• said matrix comprises at least one surface-active agent;
• said matrix comprises at least one colorant;
• said matrix comprises at least one antioxidant;
• the solid lubricant particles comprise particles of at least one solid lubricant from class 2 and at least one solid lubricant from class 4;
• the solid lubricant particles comprise particles of at least one solid lubricant from class 1, at least one solid lubricant from class 2 and at least one solid lubricant from class 4;
• the solid lubricant particles do not comprise graphite particles;
• the solid lubricant particles comprise at least boron nitride particles as the solid lubricant from class 1;
• the solid lubricant particles do not comprise molybdenum disulphide particles;
• the solid lubricant particles comprise particles of at least one solid lubricant from class 2 selected from graphite fluoride, sulphides of tin and sulphides of bismuth;
• the solid lubricant particles comprise at least polytetrafluoroethylene particles as the solid lubricant from class 4;
• said coating comprises molecules of at least one fullerene with a spherical geometry;
• the composition by weight of the matrix is as follows:

| | |
|---|---|
| polyethylene homopolymer | 15% to 90% |
| carnauba wax | 5% to 30% |
| zinc stearate | 5% to 30% |
| calcium sulphonate derivative | 0 to 50% |
| alkyl polymethacrylate | 0 to 15% |
| colorant | 0 to 1% |
| antioxidant | 0 to 1% |

• the composition by weight of the matrix is as follows:

| | |
|---|---|
| polyethylene homopolymer | 15% to 90% |
| carnauba wax | 5% to 30% |
| zinc stearate | 5% to 30% |
| calcium sulphonate derivative | 0 to 50% |
| alkyl polymethacrylate | 0 to 15% |
| polydimethylsiloxane | 0 to 2% |
| colorant | 0 to 1% |
| antioxidant | 0 to 1% |

• the composition by weight of the solid lubricants is as follows:

| | |
|---|---|
| graphite fluoride | 20% to 99% |
| boron nitride | 0% to 30% |
| polytetrafluoroethylene | 1% to 80% |

• the composition by weight of the solid lubricants is as follows:

| | |
|---|---|
| sulphides of tin | 20% to 99% |
| boron nitride | 0 to 30% |
| polytetrafluoroethylene | 1% to 80% |

• the composition by weight of the solid lubricants is as follows:

| | |
|---|---|
| sulphides of bismuth | 20% to 99% |
| boron nitride | 0 to 30% |
| polytetrafluoroethylene | 1% to 80% |

• the composition by weight of the coating is as follows:

| | |
|---|---|
| matrix | 70% to 95% |
| solid lubricants | 5% to 30% |

• the thickness of the coating is in the range 10 µm to 50 µm;
• the coating is also applied to a sealing surface which is fitted to come into sealed interference contact with a corresponding surface of a second threaded element after connection of the two threaded elements by makeup;

The invention also pertains to a threaded tubular connection comprising a male threaded element and a female threaded element in which at least one of said threaded elements is as defined above, and to a method for finishing a threaded tubular element, in which a thin layer of a solid anti-galling coating as defined above is applied to at least the surface of the threading after having subjected the surface to be coated to a surface treatment which is fitted to improve adhesion of the coating.

The method of the invention may comprise at least some of the following features:
- heating the constituents of the coating to a temperature which is higher than the melting point of the matrix and the coating is then applied by spraying said constituents comprising the molten matrix;
- the coating is applied by projection through a flame of a powder formed by the constituents of the coating;
- the coating is applied by spraying an aqueous emulsion in which the constituents of the coating are dispersed;
- the threaded element is heated to a temperature of 80°C or more;
- the threaded element is held at ambient temperature;
- said surface treatment is selected from mechanical treatments, chemical treatments and non reactive deposits;
- the surface to be coated is a metallic surface and said surface treatment is a treatment for chemical conversion of said surface;
- said chemical conversion treatment is a phosphatation;
- said surface treatment is followed by a treatment for impregnating the roughness or pores of the surface to be coated (12) by nanomaterials (11) with an anticorrosive action;
- said nanomaterials are particles (11) of zinc oxide;
- said nanomaterials have a mean particle size of the order of 200 nm;
- said nanomaterials are applied in the form of an aqueous dispersion.

The characteristics and advantages of the invention will become apparent from the description below, made with reference to the accompanying drawings.
Figure 1 shows a diagram of two tubes which are ready to be assembled by makeup of their threaded elements in a hydrocarbon well.
Figure 2 shows, on a larger scale, a portion of the threaded surface of a threaded element the pores of which are impregnated by nanomaterials in accordance with the method of the invention.
Figures 3 and 4 diagrammatically show devices which can be used to carry out the method of the invention.
Figure 5 diagrammatically shows a device for evaluating the coating of the invention by a makeup-breakout test.

The invention resides in a study of the tribological behaviour of certain materials and draws on certain notions which are summarized below.

### Fundamental concepts

### Solid lubricant transfer film effect or leafing effect

Solid lubricants in the hydrodynamic and dry lubrication regime, when dispersed in a fluid or viscoplastic material, tend to become fixed on the surfaces in a stable manner, modifying the frictional characteristics thereof. They are transferred and bonded to the surface by chemical bonding, which results in good wear resistance and an improvement in frictional properties. The nature of the solids endows the surfaces with an anti-wear protection, with resistance and anti-wear properties at the extreme pressures generated by high surface stresses, termed Hertz pressure, and a small coefficient of friction over a wide range of loads and frictional speeds. Said properties for generating a transfer film effect or a leafing effect are used for types of friction in which the surfaces are stressed in a repetitive manner, such as that produced during makeup and breakout of systems of threaded tubular connections.

### Third body due to friction

Third body due to friction occurs between two surfaces in contact during friction.

In the absence of lubricant, two bodies rubbing against one another and under stress produce a third body formed by debris, which may or may not be chemically transformed, from each of the bodies. This third body defines a part of the frictional properties by its behaviour under applied stress, its transformation mechanism under stress, and its ability to migrate, fix or be eliminated.

When a liquid, fluid or plastic solid lubricant, i.e. deforming under shear in a plastic manner with flow of material, is interposed between the two bodies, the lubricant forms a film separating the surfaces of the two bodies and itself constitutes a third body. Its composition is modified in boundary conditions, i.e. when the frictional stresses result in contact of the lubricated materials, with the production of solids mixing with the fluid or plastic material.

### Extreme pressure properties

These are the properties of certain products allowing surfaces suffering very high Hertz pressure to resist wear and to slide with low coefficients of friction.

### Hertz pressure

Surfaces in contact under load deform elastically, defining a zone of contact with a certain surface area. The applied load divided by said surface area defines the Hertz pressure. During high Hertz pressure, solid non plastic materials may undergo internal shear, reducing their service life by fatigue of the material, while solid plastic materials suffer this shear without structural degradation.

### Matrix

This designates a system allowing to fix or carry an active principle to a given location. It also acts as an agent for cohesion of a heterogeneous system and may have functions which supplement those of the active principles which it binds or carries.

### Synergistic effect

Bodies having basic properties may be combined into a complex body with completely different characteristics and behaviour. In the case when such behaviours result in performances, which are better than the cumulative performances of the constituents, a synergistic effect exists.

### Viscosity, plasticity, viscoplasticity, granular behaviour

Highly deformable or fluid bodies exist which undergo limited deformation under the effect of a hydrostatic pressure and a non-defined flow under the effect of even a small shear stress. Examples are oils and greases.

Slightly deformable or solid bodies exist which undergo limited deformation regardless of the nature of the stress, at least up to a certain stress threshold. This is the case with thermosetting systems having a yield strength beyond which the structure of the material degrades.

Most existing materials are between these two extremes (materials with elastic, plastic, viscous or viscoplastic behaviour).

The third body generated or present during friction owes its lubricating or non-lubricating properties to its physical state, as seen in Table 1 below.

**TABLE 1**

| Category | 1 | 2 | 3 |
|---|---|---|---|
| Physical state of third body | Plastic solid | Granular solid | Fluid |
| Description of behaviour | Viscoplastic flow | Frictional-collisional state | Frictional-viscous behaviour |
| Effect | Lubricant | Non lubricant | lubricant |

The materials used in the matrix of the invention belong to category 1 in Table 1

### Thermoplastic and thermosetting polymers

The term "thermoplastic" defines a polymer which is fusible, capable of being reversibly softened then melted by heating to respective temperatures T_{g} and Tₘ (glass transition temperature and melting point) and solidified by cooling. Thermoplastic polymers are transformed without chemical reaction, in contrast to thermosetting polymers. Thermoplastic polymers are used in the invention to obtain, under friction, viscous flow while in the static position retaining a dry solid structure (non adhesive) which is dry to the touch and stable. In contrast, in general, thermosetting polymers do not have or have poor viscous behaviour under stress.

### Metal soap

This term encompasses soaps of alkali metals and alkaline-earth metals and of other metals. They are fusible compounds having the ability to flow between surfaces (category 1 in Table 1).

### Wax

This term encompasses fusible substances with lubricating properties of a variety of origins (mineral, in particular from petrol distillation, vegetable, animal or synthetic) with a more or less pasty or hard consistency and with a melting point and drop point which may vary widely depending on their nature.

### Corrosion inhibitors

These are additives endowing a liquid or solid material applied to a surface with the ability to protect said surface from different modes of corrosion. Such corrosion inhibitors function according to various chemical, electrochemical or physicochemical mechanisms.

### Solid lubricants

A solid lubricant is a solid stable body which, interposing between two frictional surfaces, enables to reduce the coefficient of friction and to reduce wear and damage to the surfaces. Said bodies may be classified into different categories defined by the mechanism of operation and structure:
Class 1: solid bodies owing their lubricating properties to their crystalline structure, for example graphite or boron nitride BN;
Class 2: solid bodies owing their lubricating properties to their crystalline structure and to a reactive chemical element in their composition, for example molybdenum disulphide MoS₂, graphite fluoride, sulphides of tin or sulphides of bismuth;
Class 3: solid bodies owing their lubricating properties to their chemical reactivity, for example certain thiosulphate type chemical compounds;
Class 4: solid bodies owing their lubricating properties to plastic or viscoplastic behaviour under friction stresses, for example polytetrafluoroethylene, PTFE, or polyamides.

In order to define a very high performance product, the inventors studied the synergistic properties of the various classes of solid lubricants.

Preferred solid lubricants for use in the invention comprise compounds of class 2 which until now have not been used to a great extent, such as graphite fluorides or complex tin or bismuth sulphides. According to the inventors, they differ from traditional solid lubricants such as graphite, molybdenum disulphide or tungsten disulphide in their greater ability to bind with metals and their much better performance under extreme pressure. When used synergistically with solid lubricants of other classes, they enable to achieve particularly remarkable performances.

The inventors investigated solutions which do not use graphite, which can facilitate corrosion, nor molybdenum disulphide, as this compound is known to be unstable, in particular in the presence of moisture, and to liberate corrosive oxide of sulphur for steel or hydrogen sulphide, possibly rendering the steel sensitive to hydrogen sulphide stress cracking, SSC.

### Fullerenes

These are molecular materials having a structure in the form of closed or open tubes or closed or open spheres, in a single layer or multilayers. Spherical fullerenes are several tens of nm in size in a monolayer and over about 80 nm as a multilayer. They act on the surfaces, blocking, in a stable manner, the sites created by the surface roughness and blocking flake type degradation.

### Types of stress

The invention takes into account the various stresses to which the threaded tubular connections are subjected as they function.

### Friction at low and high speed, and low and high Hertz pressure

The frictional system during makeup and breakout of threaded connections is complicated by the wide variety of frictional speeds encountered. The speeds may be relatively high during makeup and almost zero at the end of makeup or the beginning of breakout. Further, Hertz pressure is very high during the same frictional periods, leading to limiting conditions. Thus, the inventors sought to define a system satisfying said stresses.

To overcome problems due to kinetic stresses, the inventors developed a matrix the properties of which are plastic resulting in viscous flow under stress and satisfying all of the speed situations encountered. The use of several constituents is necessary for the highest performance systems to adapt them to this wide variety of shear. Said matrix enables to maintain the other active elements in place and contribute to the production of stable transfer films or leaves.

Thermoplastic resins generally with plastic characteristics were selected and the inventors picked out polyethylene from the array of existing viscoplastic polymers, in preference to other viscoplastic polymers such as polyamide 6, polyamide 11 or polypropylene, which pose application problems due to their high viscosity in the molten state. Polyethylene types with melting points above 105°C were selected.

Improved matrix plasticity was achieved by adding metal soap type chemical compounds, among which calcium, bismuth and zinc soaps which produced excellent results as regards the number of makeup-breakout steps under the on-site conditions described above, as well as an improvement in debris re-agglomeration properties. Zinc stearate was selected from said soaps because of its synergistic effect with the corrosion inhibitors studied below.

Incorporating natural fats such as carnauba wax into the matrix enables to optimize the debris re-agglomeration properties during makeup-breakout operations.

In order to satisfy limiting lubrication stresses under quasi-static conditions along with very high frictional loads, the inventors developed a system of suitable additives based on solid lubricants. Conventional additives only function when the surface stresses allow them to react, which only occurs under certain loads and frictional speeds. The inventors thus used the solid lubricant technique, capable of guaranteeing a lubricating regime even under quasi static conditions. The inventors more particularly used the synergistic effect between different classes of solid lubricants and the synergistic effect between them and the viscoplastic behaviour of the matrix, in order to cover all speed conditions and stress conditions encountered. These synergistic effects readily produce a leafing effect reinforced by the action of the matrix. Class 1/class 2 synergies and class 1/class 2/class 4 synergies were successfully tested.

An increase of 50% in the number of makeup-breakout cycles under on site conditions was observed with systems combining classes 1, 2 and 4, compared with a class 2/class 4 type synergy.

The inventors observed particularly good synergistic performances with the following products: graphite fluoride (class 2)/PTFE (class 4)/boron nitride (class 1), tin disulphide (class 2)/PTFE (class 4)/boron nitride (class 1) and bismuth sulphide (class 2)/PTFE (class 4)/boron nitride (class 1).

### Hostile environment (saline or non saline humidity)

Depending on the surface anti-corrosion protection requirements, it may be necessary to incorporate corrosion inhibitors into the matrix. Of these, calcium sulphonate derivatives and in particular those derived from associating calcium oxide and calcium sulphonates in a medium constituted by waxes, petroleum resins or paraffins, such as the product sold by LUBRIZOL under the trade name ALOX 2211 Y, proved to be particularly high performance, but other compounds may also be used such as amine, aminoborate, quaternary amine, superalkalinized sulphonate on polyalphaolefin, strontium phosphosilicate, zinc phosphosilicate or borate carboxylate type may also be used.

Corrosion resistance may also be improved by associating the selected corrosion inhibitor with compounds which act by other mechanisms to block corrosion. As indicated above, zinc stearate in particular demonstrated synergistic properties with corrosion inhibitors while contributing greatly to the lubricating behaviour of the matrix.

The principal test of anticorrosion protection is the salt spray test carried out in accordance with International standard ISO 9227 and given the index Re in accordance with ISO EN 2846-3 on a plate treated by manganese phosphatation (deposit of 8 to 20 g/m² of phosphate).

### Use in a protected environment (environmental compatibility constraints)

The matrix composition may be intended to block debris from friction on the surface to eliminate environmental pollution possibilities. Because of a suitable composition of the matrix, such debris re-agglomerates as soon as it is formed.

In order to demonstrate this property, the inventors included quantitative procedures in the experimental protocols by weighing the debris generated during friction. They were thus able to establish the efficacy of metal soaps and waxes.

However, depending on the amounts of corrosion inhibitors required, degradation of the debris trapping properties or debris re-agglomeration properties could be observed, which the inventors sought to correct. Thus, they considered the influence of very viscous polymers such as alkyl polymethacrylates (PAMA), polybutenes, polyisobutenes and polysiloxanes, excellent results in a debris re-agglomeration test being obtained with a PAMA with a kinematic viscosity of 850 mm²/s at 100°C sold by ROHMAX under the trade name VISCOFLEX 6-950.

After some makeup-breakout cycles, an examination of two threadings provided with a coating of the invention only one of which contained a PAMA showed that with this coating, the debris produced by friction was agglomerated and incorporated onto the frictional surface without causing external pollution, while with another coating the debris remained dispersed.

### Coating applicability

To improve the adhesion of the coating at ambient temperature, it may be necessary to add at least one surface-active agent (also called surfactant) to the matrix.

In this regard the inventors have more specially considered the addition of 2 % or less of polydimethylsiloxane.

Other compounds, either polymer or not, having similar surface-active properties can also be considered.

The invention thus combines two groups of products, by the systematic study of synergistic interactions between them:
- the constituents of the matrix;
- a synergistic ensemble of solid lubricants.

The method of the invention comprises preparing the surface of the elements to be lubricated.

Makeup-breakout tests showed that to properly establish a transfer film, it is necessary to modify the surface to be coated either by a mechanical treatment such as sand-blasting or shot-blasting, or by physical or chemical modification of the surfaces using a reactive treatment based on crystallized mineral deposits on the surface, chemical attack, for example using an acid, a zinc or manganese phosphatation treatment or oxalation resulting in a surface chemical conversion layer. Among those surface treatments phosphatation is the preferred one as it enables to produce a surface with the proper adhesion resulting in the production of a transfer film resisting during friction and very stable, as well as a base anti-corrosion protection.

It may also be desirable to prepare a complementary surface consisting of impregnating the pores of the surface using nanomaterials the size of which enables them to be inserted into the pores. The aim of said impregnation is to block and saturate sites created by the pores with a material having a passivating action in order to protect the surface against corrosion while keeping good adhesion of the coating.

Figure 2 diagrammatically shows impregnation of particles 11 into the pore sites 12 of a metallic substrate 13.

The inventors have established that performance was improved in the salt spray test carried out in accordance with the standards cited above (increase of 20% in the corrosion appearance time) by inserting zinc oxide particles which are nanometric in size (mean of 200 nm) applied by simple dispersion in water.

To allow visual identification of the treated surfaces, it is possible to use any known organic colorant in amounts (≤ 1%, for example) which do not degrade the frictional performances.

To preserve the coating from degradation by oxidation due, for example, to heat or to exposure to UV radiation, it is possible to add one or more antioxidants. Polyphenolic compounds, naphthylamine derivatives and organic phosphites constitute the principal families of antioxidants. The inventors have in particular selected a combination of IRGANOX® L150 (system of polyphenolic and amine antioxidants) and IRGAFOS® 168 (tris(2,4-di-tert-butylphenyl) phosphite) from Ciba-Geigy.

The invention also pertains to modes of application of the coating to allow it to be easily used on an industrial scale. Various techniques can be used to this end, the most suitable thereof being described below.

The hot melt spray technique consists of keeping the product at a high temperature in the liquid phase and spraying it using thermostatted spray guns. The product is heated to between 10°C and 50°C above its melting point and sprayed onto a preheated surface at a temperature above the melting point to provide good surface coverage.

In a variation, spraying is carried out on a not-preheated threaded element (i.e. held at ambient temperature). The coating composition is then adapted by addition of a small amount of a surface-active agent, for example 2 % maximum, typically 0.6 %, of polydimethylsiloxane.

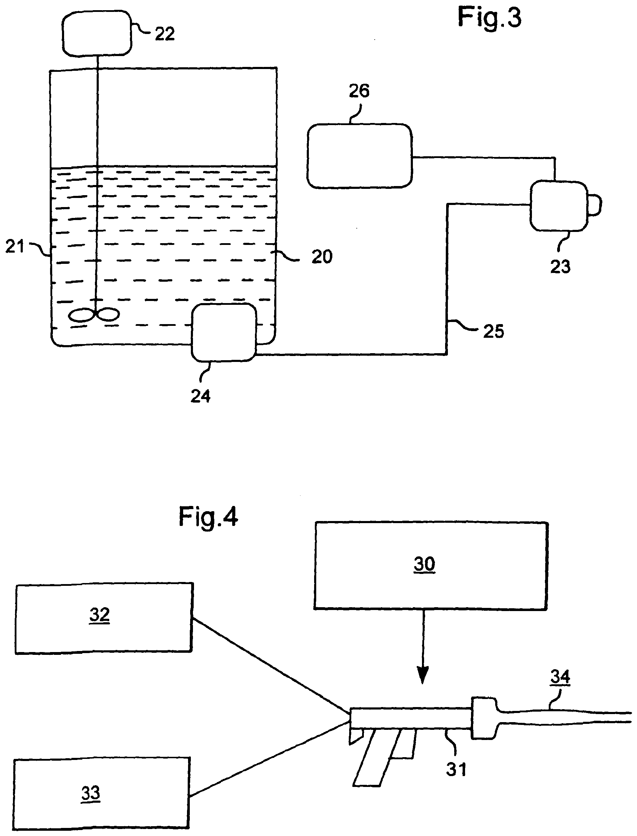

Figure 3 shows an example of a facility for carrying out the method. The product 20 is melted in a tank 21, stirring using a propeller stirrer 22, then sent via an adjustable pump 24 through a pipe 25 to a spray head 23 which is also supplied with air via a compressor 26. The temperatures of the components 21 and 23 to 26 are adjustable.

A further technique is emulsion coating, in which the product is sprayed in the form of an aqueous emulsion. The emulsion and the substrate may be at ambient temperature, and a drying time is therefore required. Said drying time may be considerably reduced by pre-heating the product to between 60°C and 80°C and/or heating the surface to between 50°C and 150°C.

Figure 4 illustrates the thermal spray technique or flame spraying technique. In this case, the product 30 in powder form is projected onto the surface to be coated from a gun 31 supplied with air 32 and a fuel gas 33. The powder melts when it passes through the flame 34 and covers its target in a homogeneity manner.

### Example

A threaded connection of the VAM TOP HC type with a nominal diameter of 177.8 mm (7 in) and with a weight per unit length of 43.15 kg/m (29 lb/ft) was used formed from low alloy steel (L80 grade) in accordance with the technical specifications issued by the OCTG Division of Vallourec & Mannesmann Tubes.

Before application of the coating, the male threaded element had undergone zinc phosphatation (weight of layer in the range 4 to 20 g/m²) and the female threaded element had undergone manganese phosphatation (weight of layer in the range 8 to 20 g/m²). The threaded elements were preheated to 130°C and applied thereto was a 35 µm thick layer of a product which was kept molten at 150°C by hot melt spraying, with the following composition:

| | |
|---|---|
| Polyethylene sold by CLARIANT under the trade name PE 520 | 19% |
| Carnauba wax | 15% |
| Zinc stearate | 20% |
| PAMA sold by ROHMAX under the trade name VISCOPLEX 6-950 | 5% |
| Calcium sulphonate derivative sold by LUBRIZOL under the trade name ALOX 2211 Y | 30% |
| Graphite fluoride | 7% |
| Polytetrafluoroethylene | 2% |
| Boron nitride | 1% |
| Colorant (quinizarine green, C₂₈H₂₂N₂O₂) Antioxidants sold by Ciba-Geigy: | 0.5% |
| IRGANOX® L150 | 0.3% |
| IRGAFOS® 168 | 0.2% |

Result of salt spray test using ISO 9227 and ISO EN 2846-3: Re = 0 after 1000 hours.

The on-site conditions were simulated by a makeup-breakout test in which the coupling 40 (Figure 5) comprising the female element was held vertically in the fixed jaw 41 of power tongs and the male element, formed at the lower end of a vertically disposed short tube 42 known as a pup joint, was pre-made up by hand into the female element.

To compensate for the shortness of the tube 42 (1 metre) and to simulate a 13 metre long tube, a mass 43 of 420 kg which had been previously suspended from a traveling crane was placed a the upper end of the tube 42, without disposing the centre of gravity of the mass 43 exactly on the axis of the tube 42 and the coupling 40.

The male element was then taken into the moving jaw 44 of the power tongs and made up into the female element with an initial rotation speed of 16 rpm, reducing the speed in the final phase until it stopped when the nominal makeup torque of the uncoated threaded connection was reached, which was 20100 N.m in the example.

Breakout was carried out symmetrically, i.e. at an increasing rotation speed.

More than 10 makeup-breakout cycles could be carried out under these conditions with no degradation of the constituent parts of the threaded elements.

## Claims

1. A threaded element for a threaded tubular connection which is resistant to galling, comprising a threading coated with a solid thin coating which is not sticky to the touch and adheres to the substrate, which comprises a solid matrix in which particles of solid lubricants are dispersed, **characterized in that** the solid matrix is lubricating and exhibits plastic or viscoplastic type rheological behaviour, and **in that** said particles of solid lubricants comprise particles of lubricants from at least two of
classes 1, 2, 3 and 4, class 1 being solid bodies owing their lubrication properties to their crystalline structure, for example graphite or boron nitride BN,
class 2 being solid bodies owing their lubricating properties to their crystalline structure and to a reactive chemical element in their composition,for example molybdenum disulphide MoS₂ , graphite fluoride, sulphides of tin or sulphides of bismuth,
class 3, being solid bodies owing their lubricating properties to their chemical reactivity,for example certain thiosulphate type chemical compounds,
and class 4 being solid bodies owing their lubricating properties to plastic or viscoplastic behaviour under friction stresses, for example polytetrafluoroethylene, PTFE, or polyamides.

2. A threaded element according to claim 1, in which said matrix has a melting point in the range 80°C to 320°C.

3. A threaded element according to claim 1 or claim 2, in which said matrix comprises at least one thermoplastic polymer.

4. A threaded element according to claim 3, in which said thermoplastic polymer is polyethylene.

5. A threaded element according to one of the preceding claims, in which said matrix comprises at least one metal soap.

6. A threaded element according to claim 5, in which the soap contributes to capture coating debris produced by friction.

7. A threaded element according to claim 5 or claim 6, in which the soap is zinc stearate.

8. A threaded element according to one of the preceding claims, in which said matrix comprises at least a wax of vegetable, animal, mineral or synthetic origin.

9. A threaded element according to claim 8, in which the wax contributes to capture debris from the coating produced by friction.

10. A threaded element according to claim 8 or claim 9, in which the wax is carnauba wax.

11. A threaded element according to one of the preceding claims, in which said matrix comprises at least one corrosion inhibitor.

12. A threaded element according to claim 11, in which the corrosion inhibitor is a calcium sulphonate derivative.

13. A threaded element according to claim 11 or claim 12 in combination with claim 5 or claim 6, in which the soap is selected to improve the time to appearance of corrosion under the ISO 9227 salt spray corrosion test.

14. A threaded element according to one of the preceding claims, in which said matrix comprises at least one liquid polymer with a kinematic viscosity at 100°C of at least 850 mm²/s.

15. A threaded element according to claim 14, in which said liquid polymer is insoluble in water.

16. A threaded element according to claim 14 or claim 15, in which said liquid polymer is selected from an alkyl polymethacrylate, a polybutene, a polyisobutene and a polydialkylsiloxane.

17. A threaded element according to one of the preceding claims, in which the matrix comprises at least one surface-active agent.

18. A threaded element according to one of the preceding claims, in which said matrix comprises at least one colorant.

19. A threaded element according to one of the preceding claims, in which said matrix comprises at least one antioxidant.

20. A threaded element according to one of the preceding claims, in which the solid lubricant particles comprise particles of at least one solid lubricant from class 2 and at least one solid lubricant from class 4.

21. A threaded element according to one of the preceding claims, in which the solid lubricant particles comprise particles of at least one solid lubricant from class 1, at least one solid lubricant from class 2 and at least one solid lubricant from class 4.

22. A threaded element according to one of the preceding claims, in which the solid lubricant particles do not comprise graphite particles.

23. A threaded element according to one of the preceding claims, in which the solid lubricant particles comprise at least boron nitride particles as the solid lubricant from class 1.

24. A threaded element according to one of the preceding claims, in which the solid lubricant particles do not comprise molybdenum disulphide particles.

25. A threaded element according to one of the preceding claims, in which the solid lubricant particles comprise particles of at least one solid lubricant from class 2 selected from graphite fluoride, sulphides of tin and sulphides of bismuth.

26. A threaded element according to one of the preceding claims, in which the solid lubricant particles comprise at least polytetrafluoroethylene particles as the solid lubricant from class 4.

27. A threaded element according to one of the preceding claims, in which said coating comprises molecules of at least one fullerene with a spherical geometry.

28. A threaded element according to one of the preceding claims, in which the composition by weight of the matrix is as follows:
| | |
|---|---|
| polyethylene homopolymer | 15% to 90% |
| carnauba wax | 5% to 30% |
| zinc stearate | 5% to 30% |
| calcium sulphonate derivative | 0 to 50% |
| alkyl polymethacrylate | 0 to 15% |
| colorant | 0 to 1% |
| antioxidant | 0 to 1% |

29. A threaded element according to one of the preceding claims, in which the composition by weight of the matrix is as follows:
| | |
|---|---|
| polyethylene homopolymer | 15% to 90% |
| carnauba wax | 5% to 30% |
| zinc stearate | 5% to 30% |
| calcium sulphonate derivative | 0 to 50% |
| alkyl polymethacrylate | 0 to 15% |
| polydimethylsiloxane | 0 to 2 % |
| colorant | 0 to 1% |
| antioxidant | 0 to 1% |

30. A threaded element according to one of the preceding claims, in which the composition by weight of the solid lubricants is as follows:
| | |
|---|---|
| graphite fluoride | 20% to 99% |
| boron nitride | 0% to 30% |
| polytetrafluoroethylene | 1% to 80% |

31. A threaded element according to one of claims 1 to 28, in which the solution by weight of the solid lubricants is as follows:
| | |
|---|---|
| sulphides of tin | 20% to 99% |
| boron nitride | 0 to 30% |
| polytetrafluoroethylene | 1% to 80% |

32. A threaded element according to one of claims 1 to 28, in which the composition by weight of the solid lubricants is as follows:
| | |
|---|---|
| sulphides of bismuth | 20% to 99% |
| boron nitride | 0 to 30% |
| polytetrafluoroethylene | 1% to 80% |

33. A threaded element according to one of the preceding claims, in which the composition by weight of the coating is as follows:
| | |
|---|---|
| matrix | 70% to 95% |
| solid lubricants | 5% to 30% |

34. A threaded element according to one of the preceding claims, in which the thickness of the coating is in the range 10 µm to 50 µm.

35. A threaded element according to one of the preceding claims, in which the coating is also applied to a sealing surface which is fitted to come into sealing contact with a corresponding surface of a second threaded element after assembling the two threaded elements by makeup.

36. A threaded tubular connection comprising a male threaded element and a female threaded element, **characterized in that** at least one of said threaded elements is in accordance with one of the preceding claims.

37. A method for finishing a threaded tubular element, in which a thin layer of a solid anti-galling coating is applied to at least the surface of the threading to obtain a solid coating, **characterized in that** the surface to be coated undergoes a surface treatment for improving adhesion of the coating and **in that** the constituents of said coating are as defined in one of claims 1 to 35.

38. A method according to claim 37, in which the constituents of the coating are heated to a temperature which is higher than the melting point of the matrix and the coating is then applied by spraying said constituents comprising the molten matrix.

39. A method according to claim 37, in which the coating is applied by projection through a flame of a powder formed by the constituents of the coating.

40. A method according to claim 37, in which the coating is applied by spraying an aqueous emulsion in which the constituents of the coating are dispersed.

41. A method according to one of claims 37 to 40, in which the threaded element is heated to a temperature of 80°C or more.

42. A method according to one of claims 37 to 40 in which the threaded element is held at ambient temperature.

43. A method according to one of claims 37 to 42, in which said surface treatment is selected from mechanical treatments, chemical treatments and non reactive deposits.

44. A method according to one of claims 37 to 43, in which the surface to be coated is a metallic surface and said surface treatment is a treatment for chemical conversion of said surface.

45. A method according to claim 44, in which said chemical conversion treatment is a phosphatation.

46. A method according to one of claims 37 to 45, in which said surface treatment is followed by a treatment for impregnating the roughness or pores of the surface to be coated (12) by nanomaterials (11) with an anticorrosive action.

47. A method according to claim 46, in which said nanomaterials are particles (11) of zinc oxide.

48. A method according to claim 46 or claim 47, in which said nanomaterials have a mean particle size of the order of 200 nm.

49. A method according to one of claims 46 to 48, in which said nanomaterials are applied in the form of an aqueous dispersion.

## Patentansprüche

1. Gewindeelement für eine rohrförmige Gewindeverbindung, die abriebbeständig ist, mit einem Gewinde, das mit einer festen dünnen Beschichtung ummantelt ist, die bei Berührung nicht klebrig ist und an dem Substrat anhaftet, welches eine Festkörpermatrix aufweist, in der Partikel aus Festschmierstoffen fein verteilt sind, **dadurch gekennzeichnet, dass** die Festkörpermatrix schmierend ist und ein plastisches oder zähelastisches Fließverhalten zeigt, und dadurch, dass die Festschmierstoffpartikel Schmierstoffpartikel aufweisen aus mindestens zwei der Klassen 1, 2, 3 und 4, wobei
die Klasse 1 Festkörper umfasst, die ihre Schmiereigenschaften ihrer Kristallstruktur verdanken, zum Beispiel Graphit oder Bornitrid BN,
die Klasse 2 Festkörper umfasst, die ihre Schmiereigenschaften ihrer Kristallstruktur und einem reaktiven chemischen Element in ihrer Zusammensetzung verdanken, zum Beispiel Molybdändisulfid MoS₂, Graphitfluorid, Zinnsulfiden oder Wismutsulfiden,
die Klasse 3 Festkörper umfasst, die ihre Schmiereigenschaften ihrer chemischen Reaktivität verdanken, zum Beispiel bestimmte chemische Thiosulfatverbindungen, und
die Klasse 4 Festkörper umfasst, die ihre Schmiereigenschaften einem plastischen oder zähelastischen Verhalten unter Reibungsbeanspruchungen verdanken, zum Beispiel Polytetrafluorethylen, PTFE, oder Polyamiden.

2. Gewindeelement nach Anspruch 1, bei dem die Matrix einen Schmelzpunkt im Bereich von 80 °C bis 320 °C aufweist.

3. Gewindeelement nach Anspruch 1 oder Anspruch 2, bei dem die Matrix mindestens ein thermoplastisches Polymer aufweist.

4. Gewindeelement nach Anspruch 3, bei dem das thermoplastische Polymer Polyethylen ist.

5. Gewindeelement nach einem der vorstehenden Ansprüche, bei dem die Matrix mindestens eine Metallseife aufweist.

6. Gewindeelement nach Anspruch 5, bei dem die Seife zum Einfangen von Beschichtungsabrieb, der durch Reibung erzeugt wird, beiträgt.

7. Gewindeelement nach Anspruch 5 oder 6, bei dem die Seife Zinkstearat ist.

8. Gewindeelement nach einem der vorstehenden Ansprüche, bei dem die Matrix mindestens ein Wachs pflanzlichen, tierischen, mineralischen oder synthetischen Ursprungs aufweist.

9. Gewindeelement nach Anspruch 8, bei dem das Wachs zum Einfangen von Abrieb von der Beschichtung, der durch Reibung erzeugt wird, beiträgt.

10. Gewindeelement nach Anspruch 8 oder 9, bei dem das Wachs Carnaubawachs ist.

11. Gewindeelement nach einem der vorstehenden Ansprüche, bei dem die Matrix mindestens einen Korrosionshemmstoff aufweist.

12. Gewindeelement nach Anspruch 11, bei dem der Korrosionshemmstoff ein Calciumsulfonatderivat ist.

13. Gewindeelement nach Anspruch 11 oder 12 in Kombination mit Anspruch 5 oder 6, bei dem die Seife ausgewählt ist, um die Zeitdauer bis zum Auftreten von Korrosion bei dem Salzsprüh-Korrosionstest nach ISO 9227 zu verlängern.

14. Gewindeelement nach einem der vorstehenden Ansprüche, bei dem die Matrix mindestens ein flüssiges Polymer aufweist mit einer kinematischen Viskosität bei 100 °C von mindestens 850 mm²/s.

15. Gewindeelement nach Anspruch 14, bei dem das flüssige Polymer wasserunlöslich ist.

16. Gewindeelement nach Anspruch 14 oder 15, bei dem das flüssige Polymer ausgewählt ist aus einem Alkylpolymethacrylat, einem Polybuten, einem Polyisobuten und einem Polydialkylsiloxan.

17. Gewindeelement nach einem der vorstehenden Ansprüche, bei dem die Matrix mindestens ein Tensid aufweist.

18. Gewindeelement nach einem der vorstehenden Ansprüche, bei dem die Matrix mindestens einen Farbstoff aufweist.

19. Gewindeelement nach einem der vorstehenden Ansprüche, bei dem die Matrix mindestens ein Antioxidans aufweist.

20. Gewindeelement nach einem der vorstehenden Ansprüche, bei dem die Festschmierstoffpartikel Partikel mindestens eines Festschmierstoffs aus der Klasse 2 und mindestens eines Festschmierstoffs aus der Klasse 4 aufweisen.

21. Gewindeelement nach einem der vorstehenden Ansprüche, bei dem die Festschmierstoffpartikel Partikel mindestens eines Festschmierstoffs aus Klasse 1, mindestens eines Festschmierstoffs aus Klasse 2 und mindestens eines Festschmierstoffs aus Klasse 4 aufweisen.

22. Gewindeelement nach einem der vorstehenden Ansprüche, bei dem die Festschmierstoffpartikel keine Graphitpartikel aufweisen.

23. Gewindeelement nach einem der vorstehenden Ansprüche, bei dem die Festschmierstoffpartikel mindestens Bornitridpartikel als Festschmierstoff aus der Klasse 1 umfassen.

24. Gewindeelement nach einem der vorstehenden Ansprüche, bei dem die Festschmierstoffpartikel nicht Molybdändisulfidpartikel umfassen.

25. Gewindeelement nach einem der vorstehenden Ansprüche, bei dem die Festschmierstoffpartikel Partikel mindestens eines Festschmierstoffs aus der Klasse 2 umfassen, die ausgewählt sind aus Graphitfluorid, Zinnsulfiden und Wismutsulfiden.

26. Gewindeelement nach einem der vorstehenden Ansprüche, bei dem die Festschmierstoffpartikel mindestens Polytetrafluorethylenpartikel als den Festschmierstoff aus Klasse 4 aufweisen.

27. Gewindeelement nach einem der vorstehenden Ansprüche, bei dem die Beschichtung Moleküle aus mindestens einem Fulleren mit Kugelgeometrie aufweist.

28. Gewindeelement nach einem der vorstehenden Ansprüche, bei dem die Zusammensetzung der Matrix in Gewichtsprozent folgende ist:
| | |
|---|---|
| Polyethylen-Homopolymer | 15% bis 90% |
| Carnaubawachs | 5% bis 30% |
| Zinkstearat | 5% bis 30% |
| Calciumsulfonatderivat | 0 bis 50% |
| Alkylpolymethacrylat | 0 bis 15% |
| Farbstoff | 0 bis 1% |
| Antioxidans | 0 bis 1%. |

29. Gewindeelement nach einem der vorstehenden Ansprüche, bei dem die Zusammensetzung in Gewichtsprozent folgende ist:
| | |
|---|---|
| Polyethylen-Homopolymer | 15% bis 90% |
| Carnaubawachs | 5% bis 30% |
| Zinkstearat | 5% bis 30% |
| Calciumsulfonatderivat | 0 bis 50% |
| Alkylpolymethacrylat | 0 bis 15% |
| Polydimethylsiloxan | 0 bis 2% |
| Farbstoff | 0 bis 1% |
| Antioxidans | 0 bis 1%. |

30. Gewindeelement nach einem der vorstehenden Ansprüche, bei dem die Zusammensetzung der Festschmierstoffe in Gewichtsprozent folgende ist:
| | |
|---|---|
| Graphitfluorid | 20% bis 99% |
| Bornitrid | 0 bis 30% |
| Polytetrafluorethylen | 1 bis 80%. |

31. Gewindeelement nach einem der Ansprüche 1 bis 28, bei dem die Lösung der Festschmierstoffe in Gewichtsprozent folgende ist:
| | |
|---|---|
| Zinnsulfide | 20% bis 99% |
| Bornitride | 0 bis 30% |
| Polytetrafluorethylen | 1 bis 80%. |

32. Gewindeelement nach einem der Ansprüche 1 bis 28, bei dem die Zusammensetzung der Festschmierstoffe in Gewichtsprozent folgende ist:
| | |
|---|---|
| Wismutsulfide | 20% bis 99% |
| Bornitrid | 0 bis 30% |
| Polytetrafluorethylen | 1 bis 80%. |

33. Gewindeelement nach einem der vorstehenden Ansprüche, bei dem die Zusammensetzung der Beschichtung in Gewichtsprozent folgende ist:
| | |
|---|---|
| Matrix | 70% bis 95% |
| Festschmierstoffe | 5% bis 30%. |

34. Gewindeelement nach einem der vorstehenden Ansprüche, bei dem die Dicke der Beschichtung im Bereich von 10 µm bis 50 µm liegt.

35. Gewindeelement nach einem der vorstehenden Ansprüche, bei dem die Beschichtung ebenfalls auf einer Dichtungsfläche aufgebracht ist, die so ausgeformt ist, dass sie in dichtendem Kontakt mit einer entsprechenden Fläche eines zweiten Gewindeelements nach dem Zusammenfügen der zwei Gewindeelemente durch Zusammenstecken kommt.

36. Gewinderohrverbindung mit einem Außengewindeelement und einem Innengewindeelement, **dadurch gekennzeichnet, dass** mindestens eines der Gewindeelemente ein Gewindeelement gemäß einem der vorstehenden Ansprüche ist.

37. Verfahren zur Endbearbeitung eines Gewinderohrelements, bei dem eine dünne Schicht aus einer Feststoff-Antiabriebsbeschichtung auf mindestens der Gewindefläche aufgebracht wird, um eine feste Beschichtung zu erhalten, **dadurch gekennzeichnet, dass** die zu beschichtende Fläche einer Oberflächenbehandlung unterzogen wird, um das Anhaften der Beschichtung zu verbessern, und dadurch, dass die Bestandteile der Beschichtung so sind, wie sie in einem der Ansprüche 1 bis 35 beschrieben sind.

38. Verfahren nach Anspruch 37, bei dem die Bestandteile der Beschichtung auf eine Temperatur erhitzt werden, die höher als der Schmelzpunkt der Matrix ist, und die Beschichtung dann durch Sprühen der Bestandteile, die die geschmolzene Matrix enthalten, aufgetragen wird.

39. Verfahren nach Anspruch 37, bei dem die Beschichtung durch Flammspritzen eines Pulvers, das von den Bestandteilen der Beschichtung gebildet wird, aufgetragen wird.

40. Verfahren nach Anspruch 37, bei dem die Beschichtung durch Aufsprühen einer wässerigen Emulsion, in der die Bestandteil der Beschichtung fein verteilt sind, aufgetragen wird.

41. Verfahren nach einem der Ansprüche 37 bis 40, bei dem das Gewindeelement auf eine Temperatur von 80 °C oder mehr erhitzt wird.

42. Verfahren nach einem der Ansprüche 37 bis 40, bei dem das Gewindeelement auf Raumtemperatur gehalten wird.

43. Verfahren nach einem der Ansprüche 37 bis 42, bei dem die Oberflächenbehandlung ausgewählt ist aus mechanischen Behandlungen, chemischen Behandlungen und nicht-reaktiven Ablagerungen.

44. Verfahren nach einem der Ansprüche 37 bis 43, bei dem die zu beschichtende Oberfläche eine Metallfläche ist, und bei dem die Oberflächenbehandlung eine Behandlung zur chemischen Umwandlung der Oberfläche ist.

45. Verfahren nach Anspruch 44, bei dem die chemische Umwandlungsbehandlung eine Phosphatisierung ist.

46. Verfahren nach einem der Ansprüche 37 bis 45, bei dem die Oberflächenbehandlung gefolgt wird von einer Behandlung zur Imprägnierung der Rauheit oder der Poren der zu beschichtenden Oberfläche (12) durch Nanomaterialien (11) mit einer Antikorrosionswirkung.

47. Verfahren nach Anspruch 46, bei dem die Nanomaterialien Partikel (11) aus Zinkoxid sind.

48. Verfahren nach Anspruch 46 oder 47, bei dem die Nanomaterialien eine mittlere Partikelgröße einer Größenordnung von 200 nm aufweisen.

49. Verfahren nach einem der Ansprüche 46 bis 48, bei dem die Nanomaterialien in Form einer wässerigen Dispersion aufgetragen werden.

## Revendications

1. Élément fileté pour un joint fileté tubulaire résistant au grippage, comportant un filetage recouvert d'un revêtement mince à l'état solide non collant au toucher et adhérant au substrat qui comprend une matrice solide dans laquelle sont dispersées des particules de lubrifiants solides, **caractérisé en ce que** la matrice solide est lubrifiante et présente un comportement rhéologique du type plastique ou viscoplastique, et **en ce que** lesdites particules de lubrifiants solides comportent des particules de lubrifiants d'au moins deux des classes 1, 2, 3 et 4,la classe 1 étant constituée de corps solides devant leurs propriétés lubrifiantes à leur structure cristalline, par exemple graphite, nitrure de bore BN, la classe 2 étant constituée de corps solides devant leurs propriétés lubrifiantes à leur structure cristalline et à un élément chimique réactif de leur composition, par exemple bisulfure de molybdène MoS₂, fluorure de graphite, sulfures d'étain, sulfures de bismuth, la classe 3 étant constituée de corps solides devant leurs propriétés lubrifiantes à leur réactivité chimique, par exemple certains composés chimiques de type thiosulfates, la classe 4 étant constituée de corps solides devant leurs propriétés lubrifiantes à un comportement plastique ou viscoplastique sous contrainte de frottement, par exemple polytétrafluoréthylène PTFE, ou polyamides.

2. Élément fileté selon la revendication 1, dans lequel ladite matrice présente un point de fusion compris entre 80 et 320 °C.

3. Élément fileté selon l'une des revendications 1 ou 2, dans lequel ladite matrice comprend au moins un polymère thermoplastique.

4. Élément fileté selon la revendication 3, dans lequel ledit polymère thermoplastique est du polyéthylène.

5. Élément fileté selon l'une des revendications précédentes, dans lequel ladite matrice comprend au moins un savon métallique.

6. Élément fileté selon la revendication 5, dans lequel le savon est propre à contribuer à capturer les débris du revêtement produits par frottement.

7. Elément fileté selon l'une des revendications 5 ou 6, dans lequel le savon est du stéarate de zinc.

8. Élément fileté selon l'une des revendications précédentes, dans lequel ladite matrice comprend au moins une cire d'origine végétale, animale, minérale ou de synthèse.

9. Élément fileté selon la revendication 8, dans lequel la cire est propre à contribuer à capturer les débris du revêtement produits par frottement.

10. Élément fileté selon l'une des revendications 8 ou 9, dans lequel la cire est de la cire de carnauba.

11. Élément fileté selon l'une des revendications précédentes, dans lequel ladite matrice comprend au moins un inhibiteur de corrosion.

12. Élément fileté selon la revendication 11, dans lequel l'inhibiteur de corrosion est un dérivé de sulfonate de calcium.

13. Élément fileté selon l'une des revendications 11 ou 12 en combinaison avec l'une des revendications 5 et 6, dans lequel le savon est choisi pour améliorer le temps d'apparition de la corrosion au test de brouillard salin selon norme ISO 9227.

14. Élément fileté selon l'une des revendications précédentes, dans lequel ladite matrice comprend au moins un polymère liquide d'une viscosité cinématique à 100 °C au moins égale à 850 mm²/s.

15. Élément fileté selon la revendication 14, dans lequel ledit polymère liquide est insoluble dans l'eau.

16. Élément fileté selon l'une des revendications 14 ou 15, dans lequel ledit polymère liquide est choisi parmi un polyméthacrylate d'alkyle, un polybutène, un polyisobutène et un polydialkylsiloxane.

17. Elément fileté selon l'une des revendications précédentes, dans lequel ladite matrice comprend au moins un agent tensio-actif.

18. Elément fileté selon l'une des revendications précédentes, dans lequel ladite matrice comprend au moins un colorant.

19. Elément fileté selon l'une des revendications précédentes, dans lequel ladite matrice comprend au moins un antioxydant.

20. Elément fileté selon l'une des revendications précédentes, dans lequel les particules de lubrifiants solides comprennent des particules d'au moins un lubrifiant solide de classe 2 et d'au moins un lubrifiant solide de classe 4.

21. Élément fileté selon l'une des revendications précédentes, dans lequel les particules de lubrifiants solides comprennent des particules d'au moins un lubrifiant solide de classe 1, d'au moins un lubrifiant solide de classe 2 et d'au moins un lubrifiant solide de classe 4.

22. Élément fileté selon l'une des revendications précédentes, dans lequel les particules de lubrifiants solides ne comprennent pas de particules de graphite.

23. Élément fileté selon l'une des revendications précédentes, dans lequel les particules de lubrifiants solides comprennent au moins des particules de nitrure de bore en tant que lubrifiant solide de classe 1.

24. Élément fileté selon l'une des revendications précédentes, dans lequel les particules de lubrifiants solides ne comprennent pas de particules de bisulfure de molybdène.

25. Élément fileté selon l'une des revendications précédentes, dans lequel les particules de lubrifiants solides comprennent des particules d'au moins un lubrifiant solide de classe 2 choisi parmi le fluorure de graphite, les sulfures d'étain et les sulfures de bismuth.

26. Élément fileté selon l'une des revendications précédentes, dans lequel les particules de lubrifiants solides comprennent au moins des particules de polytétrafluoréthylène en tant que lubrifiant solide de classe 4.

27. Élément fileté selon l'une des revendications précédentes, dans lequel ledit revêtement comprend des molécules d'au moins un fullerène de géométrie sphérique.

28. Élément fileté selon l'une des revendications précédentes, dans lequel la composition pondérale de la matrice est comme suit:
| | | | | |
|---|---|---|---|---|
| polyéthylène homopolymère | 15 | à | 90 | % |
| cire de carnauba | 5 | à | 30 | % |
| stéarate de zinc | 5 | à | 30 | % |
| dérivé de sulfonate de calcium | 0 | à | 50 | % |
| polyméthacrylate d'alkyle | 0 | à | 15 | % |
| colorant | 0 | à | 1 | % |
| antioxydant | 0 | à | 1 | %. |

29. Élément fileté selon l'une des revendications précédentes, dans lequel la composition pondérale de la matrice est comme suit:
| | | | | |
|---|---|---|---|---|
| polyéthylène homopolymère | 15 | à | 90 | % |
| cire de carnauba | 5 | à | 30 | % |
| stéarate de zinc | 5 | à | 30 | % |
| dérivé de sulfonate de calcium | 0 | à | 50 | % |
| polyméthacrylate d'alkyle | 0 | à | 15 | % |
| polydiméthylsiloxane | 0 | à | 2 | % |
| colorant | 0 | à | 1 | % |
| antioxydant | 0 | à | 1 | %. |

30. Élément fileté selon l'une des revendications précédentes, dans lequel la composition pondérale des lubrifiants solides est comme suit:
| | | | | |
|---|---|---|---|---|
| fluorure de graphite | 20 | à | 99 | % |
| nitrure de bore | 0 | à | 30 | % |
| polytétrafluoréthylène | 1 | à | 80 | %. |

31. Élément fileté selon l'une des revendications 1 à 28, dans lequel la composition pondérale des lubrifiants solides est comme suit:
| | | | | |
|---|---|---|---|---|
| sulfures d'étain | 20 | à | 99 | % |
| nitrure de bore | 0 | à | 30 | % |
| polytétrafluoréthylène | 1 | à | 80 | %. |

32. Élément fileté selon l'une des revendications 1 à 28, dans lequel la composition pondérale des lubrifiants solides est comme suit:
| | | | | |
|---|---|---|---|---|
| sulfures de bismuth | 20 | à | 99 | % |
| nitrure de bore | 0 | à | 30 | % |
| polytétrafluoréthylène | 1 | à | 80 | %. |

33. Élément fileté selon l'une des revendications précédentes, dans lequel la composition pondérale du revêtement est comme suit:
| | | | | |
|---|---|---|---|---|
| matrice | 70 | à | 95 | % |
| lubrifiants solides | 5 | à | 30 | %. |

34. Élément fileté selon l'une des revendications précédentes, dans lequel l'épaisseur du revêtement est comprise entre 10 µm et 50 µm.

35. Élément fileté selon l'une des revendications précédentes, dans lequel le revêtement est également appliqué sur une surface d'étanchéité apte à être en contact serrant étanche avec une surface d'étanchéité correspondante d'un second élément fileté après assemblage par vissage des deux éléments filetés.

36. Joint fileté tubulaire comprenant un élément fileté mâle et un élément fileté femelle, **caractérisé en ce que** l'un au moins desdits éléments filetés est conforme à l'une des revendications précédentes.

37. Procédé de finition d'un élément fileté tubulaire, dans lequel on applique un revêtement antigrippant en couche mince au moins sur la surface du filetage de manière à obtenir un revêtement solide, **caractérisé en ce qu'**on soumet la surface à revêtir à un traitement de surface propre à améliorer l'adhésion du revêtement et que les constituants dudit revêtement sont tels que définis dans l'une des revendications 1 à 35.

38. Procédé selon la revendication 37, dans lequel on porte les constituants du revêtement à une température supérieure à celle de fusion de la matrice et on applique ensuite le revêtement par pulvérisation desdits constituants comprenant la matrice à l'état fondu.

39. Procédé selon la revendication 37, dans lequel on applique le revêtement par projection à travers une flamme d'une poudre formée par les constituants du revêtement.

40. Procédé selon la revendication 37, dans lequel on applique le revêtement par pulvérisation d'une émulsion aqueuse dans laquelle les constituants du revêtement sont dispersés.

41. Procédé selon l'une des revendications 37 à 40, dans lequel l'élément fileté est porté à une température supérieure ou égale à 80 °C

42. Procédé selon l'une des revendications 37 à 40 dans lequel l'élément fileté est à température ambiante.

43. Procédé selon l'une des revendications 37 à 42, dans lequel ledit traitement de surface est choisi parmi les traitements mécaniques, les traitements chimiques et les dépôts non réactifs.

44. Procédé selon l'une des revendications 37 à 43, dans lequel la surface à revêtir est une surface métallique et ledit traitement de surface est un traitement de conversion chimique de cette surface.

45. Procédé selon la revendication 44, dans lequel ledit traitement de conversion chimique est une phosphatation.

46. Procédé selon l'une des revendications 37 à 45, dans lequel ledit traitement de surface est suivi d'un traitement d'imprégnation de la rugosité ou des porosités de la surface à revêtir (12) par des nanomatériaux (11) à action anticorrosion.

47. Procédé selon la revendication 46, dans lequel lesdits nanomatériaux sont des particules (11) d'oxyde de zinc.

48. Procédé selon l'une des revendications 46 et 47, dans lequel lesdits nanomatériaux ont une taille médiane de particules de l'ordre de 200 nm.

49. Procédé selon l'une des revendications 46 à 48, dans lequel lesdits nanomatériaux sont appliqués sous forme de dispersion aqueuse.
